# EUROPEAN PATENT APPLICATION

(11) **EP 0 869 312 A2**
(43) Date of publication of application: **07.10.1998**
(21) Application number: 98302574.3
(22) Date of filing: 01.04.1998
(51) Int. Cl.: F21Q 1/00, B60Q 1/26

(54) **Vehicle signal lamp**

(30) Priority: 04.04.1997 GB 9706887
(71) Applicant: Britax Vega Limited, Warwick CV34 6DE (GB)
(72) Inventor: Tysoe, Nicholas William, St. John's, Worcester (GB)
(74) Representative: Hollinghurst, Antony

(57) **Abstract**

A signal lamp assembly for a vehicle has a first bulb (14), a pair of second bulbs (16, 18) and a lens unit (20) comprising an alternating series of first and second zones (22, 24). The first zones (22) are arranged to produce a substantially collimated beam of light from the first bulb (14). The second zones (24) are arranged to produce a second substantially collimated beam of light from the second bulbs (16, 18).

## Description

This invention relates to a signal lamp assembly for a vehicle of the type having a plurality of light sources arranged to illuminate a translucent cover, the light sources being energisable independently of one another.

The various independently energisable light sources perform different functions, for example, one may be a stop lamp, another a tail lamp, a third a rear fog lamp, a fourth a reversing lamp and a fifth a turn signal indicator.

In some known lamps of this type, each separately energisable light source is arranged to illuminate a different area of the translucent cover, the various light sources being separated from one another by baffles which prevent one light source from illuminating an area of the cover intended to be illuminated by an adjacent light source. Where two functions require a light of the same colour but differing intensities, for example a tail lamp and a stop lamp or a tail lamp and a rear fog lamp, it has been customary for the two light sources to comprise two separate filaments within a single bulb. Such double filament bulbs are more expensive and less reliable than single filament bulbs.

It is an object of the invention to provide a signal lamp assembly of the type described above, in which a single area of the translucent cover can be illuminated by two separately energisable light sources without using a double filament bulb.

According to the invention, a signal lamp assembly of the type described above has a lens unit comprising an alternating series of first and second zones, the first zones being arranged to produce a substantially collimated beam of light from a first light source and the second zones being arranged to produce a second substantially collimated beam of light from a second light source.

Preferably, the two substantially collimated beams are parallel to one another.

In one form of the invention, the first light source is located at the focus of a parabolic reflector so that a collimated beam of light is directed onto the translucent cover, the first zones being substantially parallel-sided. The second light source may be located adjacent to the first light source, with the second zones comprising Fresnel prisms.

Preferably, the distance between each second zone and the second light source, in the direction of the collimated beam therefrom, is not less than the distance, in said direction, between adjacent first zones and the second light source. This avoids any risk of the first zones shading the Fresnel prisms of the second zones from the second light source.

Preferably, the lamp assembly has an outer translucent cover with pillow optics, the pitch of which is in a ratio of at least 1:2, and preferably at least 1:3, to the pitch of the first and second zones. As well as producing emergent light with the divergence required by law, the pillow optics have the additional advantage of giving the illuminated area a uniformly lit appearance, whichever light source is illuminated.

The term "pillow optics" is used herein to mean an array of lens formations of circular cross-section in planes containing the principal direction of light passing therethrough, the radius of curvature not necessarily being the same in all such planes. Such formations are also known as fish-eye optics.

An embodiment of the invention will now be described, by way of example, with reference to the accompanying drawing, which is a schematic sectional view of a combined stop and tail lamp for a motor vehicle.

The lamp shown in the drawing has a lamp body 10, a central region of which comprises an integrally formed parabolic reflector 12. A bulb 14 for the stop lamp function is mounted with its filament at the focus of the parabolic reflector 12. A pair of tail lamp bulbs 16 and 18 are mounted in the case 10 on opposite sides of the reflector 12.

An optic plate 20 is positioned in front of the bulbs 14, 16 and 18. On its surface facing towards the bulbs 14, 16 and 18, the optic plate 20 has a series of plane parallel-sided zones, such as the zones 22, located in grooves formed by adjacent raised zones, such as the zones 24, which have Fresnel lens formations, such as the formations 26 on their surfaces closest to the bulbs 14, 16 and 18. The light from the stop lamp bulb 14 incident on the parallel-sided zones such as the zone 22 emerges as a collimated beam, as illustrated in the rays 30, 32 and 34 shown in dotted lines. The Fresnel lens formations 26 are constructed so that light from the bulbs 16 and 18 also emerges as collimated light, parallel to the axis of rotation of the parabolic reflector 12, as illustrated by the chain-dotted rays 36, 38, 40, 42, 44 and 46.

Since the Fresnel prisms are all closer to the bulbs 16 and 18 than adjacent parallel-sided zones, such as the zones 22, none of the light from the bulbs 16 and 18 is shaded from any of the zones 22. Since the incident light from the bulb 14 is parallel to the side walls of the zones 24, no part of any zone 22 is shaded by an adjacent zone 24.

The front of the lamp body 10 is covered by a translucent outer cover 50 having pillow optics 52 on its inner surface to give the emergent beam the required divergence to meet legal requirements. The pitch of the pillow optics is at least twice that of the zones 22 and 24 and preferably at least three times such a pitch (as illustrated) so as to prevent the lamp from having a striped appearance when either the bulb 14 or the bulbs 16 and 18 are illuminated.

Pillow optics may be formed on the outside of the optic plate 20 as an alternative or in addition to the pillow optics 52 on the outer cover 50. If there are no optical formations on the outer cover 50, it may be omitted, the optic plate 20 serving as the outermost cover; this has the disadvantage that the lamp does not have a smooth, easily cleaned outer surface.

The optic plate 20 may have Fresnel lens formations on its surface facing towards the bulbs 14, 16 and 18 instead of on its surface facing towards the bulbs 14, 16 and 18. This has the advantage that it is not necessary to locate the plane zones in grooves in order to avoid shading, but the disadvantage that it is not practicable to collect light which is incident on the optic plate at high angles of incidence because of excessive surface reflective loss.

If it is required to reduce the brightness of the light from the stop lamp bulb 14 relative to that of the light from the tail lamp bulbs 16 and 18, the substantially plane parallel-sided zones 22 may be made slightly lens shaped (either convex or concave). The result of this is that the light originating from the bulb 14 is slightly more divergent than the light originating from the bulbs 16 and 18 as it emerges from the cover 50 with the result that the perceived brightness is reduced.

In an alternative arrangement, the outer bulbs 16 and 18 are replaced by light-emitting diodes embedded in the outer regions of the parabolic reflector 12.

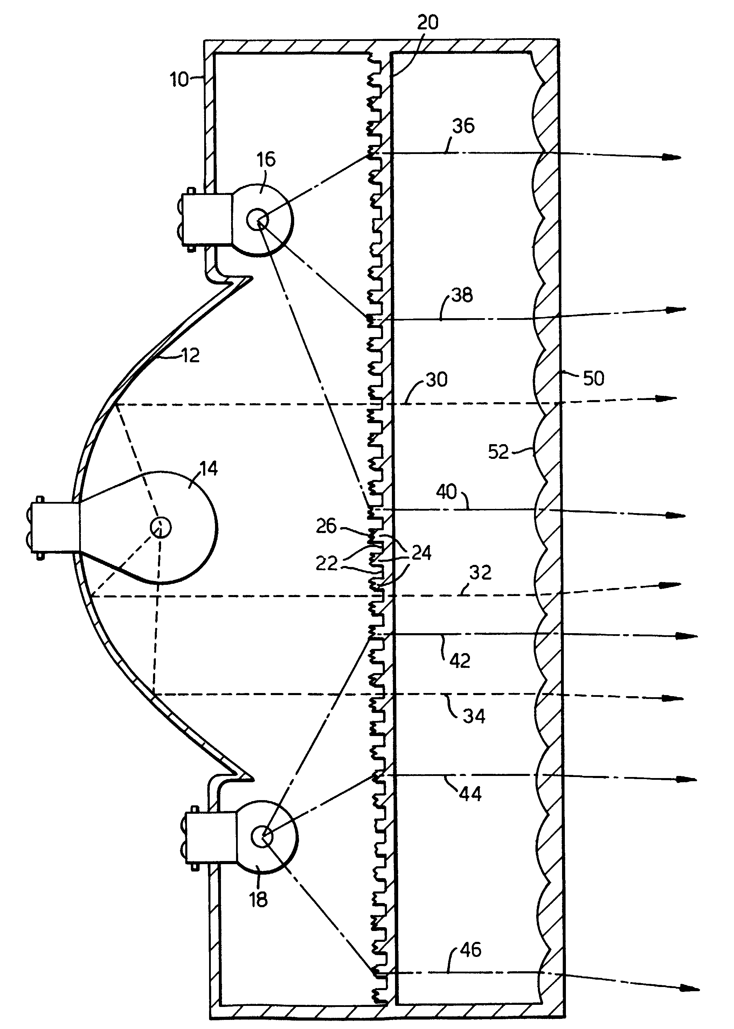

As an alternative to the stripes extending perpendicular to the plane of the drawing in Figure 1, the zones 22 and 24 could be oriented parallel to the plane of the drawing. Alternatively, they could be arranged radially to the two tail lamp bulbs 16 and 18.

The outer cover 50 is coloured in accordance with the required colour of the emergent light. It is possible to produce a lamp in accordance with the invention in which the central bulb 14 gives a different colour from the other bulbs 16 and 18. In this case, the outer cover 50 is colourless and either the bulbs have the required colour or colour filters are interposed between each bulb and the optic element 20. However, this arrangement is only usable when the lamp assembly is not required to display both colours together; a mixture of the two colours would be displayed if all the bulbs were illuminated.

## Claims

1. A signal lamp assembly for a vehicle having a plurality of light sources (14; 16, 18) arranged to illuminate a translucent cover (50), the light sources (14; 16, 18) being energisable independently of one another, characterised by a lens unit (20) comprising an alternating series of first and second zones (22, 24), the first zones (22) being arranged to produce a substantially collimated beam of light from a first light source (14) and the second zones (24) being arranged to produce a second substantially collimated beam of light from a second light source (16, 18).

2. A signal lamp assembly according to claim 1, wherein the two substantially collimated beams are parallel to one another.

3. A signal lamp assembly according to claim 1 or 2, wherein the first light source (14) is located at the focus of a parabolic reflector (12) so that a collimated beam of light is directed onto the translucent cover (50), the first zones being substantially parallel-sided (22).

4. A signal lamp assembly according to claim 1, 2 or 3, wherein the second zones (24) comprise Fresnel prisms (26).

5. A signal lamp assembly according to claim 4, wherein the second light source (16, 18) is located adjacent to the first light source (14).

6. A signal lamp assembly according to claim 4 or 5, wherein the distance between each second zone (24) and the second light source (16, 18), in the direction of the collimated beam therefrom, is not less than the distance, in said direction, between adjacent first zones (22) and the second light source (16, 18).

7. A signal lamp assembly according to any preceding claim, having an outer translucent cover (50) with pillow optics (52), the pitch of which is in a ratio of at least 1:2 to the pitch of the first and second zones (22, 24).

8. A signal lamp assembly according to claim 7, wherein the pitch of the pillow optics (52) is in a ratio of at least 1:3, to the pitch of the first and second zones (22, 24).
